# EUROPEAN PATENT SPECIFICATION

(11) **EP 2 554 836 B1**
(45) Date of publication and mention of the grant of the patent: **07.05.2014**
(21) Application number: 11382266.2
(22) Date of filing: 03.08.2011
(51) Int. Cl.: F03D 7/00, F03D 11/00, G01W 1/00

(54) **Shadow flicker measurement system, wind turbine comprising such a system, and control method using such a system**
Schattenschlagmesssystem, Windturbine mit solch einem System und Steuerungsverfahren mit solch einem System
Système de mesure de scintillement d'ombre, éolienne comprenant un tel système et procédé de contrôle utilisant un tel système

(43) Date of publication of application: 06.02.2013
(73) Proprietor: Alstom Renovables España, S.L., 08005 Barcelona (ES)
(72) Inventor: Acosta Farnós, Xavier, 08005 BARCELONA (ES); Garcia Garces, Pedro, 08005 BARCELONA (ES); Gracia Suberviola, Raul, 08005 BARCELONA (ES)
(74) Representative: ZBM Patents - Zea, Barlocci & Markvardsen

(56) References cited:
- WO-A1-2009/030252
- DE-B4- 19 928 048
- RU-C1- 2 069 842

## Description

The present invention relates to a shadow flicker measurement system for a wind turbine and a wind turbine comprising such a shadow flicker measurement system. It further relates to a method of operating a wind turbine in connection with controlling the shadow flicker of the wind turbine.

### BACKGROUND ART

Modern wind turbines are commonly used to supply electricity into the electrical grid. Wind turbines of this kind generally comprise a rotor with a rotor hub and a plurality of blades. The rotor is set into rotation under the influence of the wind on the blades. The rotation of the rotor shaft either directly drives the generator rotor ("directly driven") or through the use of a gearbox.

Shadow flicker is a phenomenon that is caused by a rotating rotor casting intermittent shadows. If these intermittent shadows reach onto an object (such as e.g. a house or another building) that is located in the vicinity of the wind turbine, this may be perceived as disturbing. Shadow flicker may thus be an important criterion taken into account when determining where wind turbines may be placed. With the increasing size of wind turbines, and rotor blades in particular, the shadows cast by these blades are of course also increasing. Shadow flicker may thus reduce the suitable areas for placement of wind turbines.

Shadow flicker does not necessarily always affect all houses in the vicinity. Throughout the year, and throughout a day, as the position of the sun relative to a wind turbine changes there may be moments in which shadows may potentially be cast onto a nearby house or other object. Whether there actually are shadows or not, may depend e.g. on the presence of clouds. During other moments, due to the relative positions of sun, wind turbine and the object in question, shadows may occur but shadow flicker is not a problem, because the shadows do not bother anyone.

Given the locations of the wind turbine and the object and given the date and time of day, it can be determined whether shadow flicker in that particular moment could be a problem or not. It then depends upon the weather conditions (e.g. presence of clouds or mist) whether or not shadow flicker actually takes place or not.

It is known from the prior art to interrupt the operation of a wind turbine whenever shadow flicker may be a problem. This however is not an optimal solution as the operation time of the wind turbine may be unnecessarily reduced and electricity that could be generated on e.g. cloudy days may not be generated, even though shadow flicker would not be a problem.

EP 1 194 690 describes also taking the level of light intensity into account when deciding to interrupt the operation of a turbine. However, it has been found that a simple measurement of light intensity is not very accurate in determining whether shadows are formed or not.

US 7,619,321 describes using three sensors positioned equidistantly along the circumference of a wind turbine tower. Light intensities measured by the three sensors may be compared in order to determine the difference in intensity between direct light (irradiated directly by the sun) and indirect light (in the shade). It has been found that the difference in light intensity between direct light and indirect light (indirect sun light may also be referred to as diffuse light) is more indicative of whether shadows will actually occur or not. However, in this prior art system, the three sensors are positioned at a certain height of the tower. If they are positioned too low, nearby trees or hills may disturb the measurements, thus rendering them useless. If they are positioned high, access to them and therefore their maintenance is highly complicated.

WO 2009/030252 describes a system wherein a shadow-control system stops a wind turbine, based on a shadow-related shut-down condition. The condition is based on a result of a comparison between a direct-light intensity and an indirect-light intensity being beyond a direct-to-indirect light threshold. For this system, it is assumed that shadow-sensitive objects are normally not positioned within a certain minimum distance from a wind turbine. Consequently, it is assumed that the rotor's intermittent shadow will typically only hit shadow-sensitive objects when the sun's elevation angle is small (and shadows long). For this reason, only an eastward-oriented sensor and a westward oriented sensor are used.

This system on the one hand suffers from the same drawbacks as the system described in US 7,619,321. On the other hand, it can only be used for wind turbines in which disturbing shadow flicker effectively only occurs during sunrise or sunset. Its application is thus limited to wind turbines in specific locations or in specific surroundings.

RU 2069842 discloses a device for radio sounding measurements inclucing a tube, a round detector and a ring detector. The diameter of the ring detector is tied up with the length of the tube, diameter of the round detector and the height of the sun in order to get reliable measurements.

This device however is rather complicated.

It is an object of the present invention to provide a shadow flicker measurement system that avoids or reduces one or more of the above-mentioned drawbacks.

### SUMMARY OF THE INVENTION

In a first aspect, a shadow flicker measurement system for a wind turbine is provided, which comprises a sun blocking element and a first and a second light sensor. The first and second light sensor may each be oriented such as to receive light incident from a hemisphere above a substantially horizontal plane and the sun blocking element and light sensors may be arranged such that the first light sensor can substantially always be directly irradiated by the sun and the second light sensor can substantially never be directly irradiated due to the presence of the sun blocking element. The second light sensor may thus be arranged such that it can only receive diffuse light.

In this aspect, a system is provided that is able to very reliably measure the difference in direct and indirect light intensity throughout the whole day. The first light sensor may receive the global solar radiation, i.e. both direct sun light (when present) and diffuse light, whereas the second light sensor may only receive diffuse light. Diffuse sun light is the sun light that is reflected by e.g. clouds, water vapour in the air, the ground etc.

This way, the ability to make these measurements is independent from the instantaneous orientation of the wind turbine, and the instantaneous (relative) position of the sun. At the same time, a system is provided that needs only two light sensors. Furthermore, since the sun blocking element creates the shade for the second light sensor (and the shade thus does not depend on e.g. the wind turbine tower), the system may easily be mounted e.g. on a wind turbine nacelle. Access to the system and its maintenance is hereby facilitated. Alternatively, the system may also be mounted e.g. on a pole in the vicinity of a wind turbine (e.g. in a wind park). As long as the measurements of the two light sensors may be regarded as representative for the location of the wind turbine, the system could be positioned anywhere.

In some embodiments, the sun blocking element may be a casing comprising one or more side-walls and an open top, said second light sensor being arranged inside said casing. Preferably, the height of the side-walls can be varied. By adapting the height of the side-walls, the system becomes versatile and may be implemented in wind turbines in widely spread geographical locations. Alternatively, the position of the second light sensor within the casing may be varied to achieve the same effect.

In another aspect, a method for operating a wind turbine comprising a shadow flicker control system substantially as hereinbefore described and further comprising a rotor that, when rotating, may cast an intermittent shadow onto an object depending on the relative position of the sun is provided. The method comprises determining whether due to the instantaneous position of the sun relative to the wind turbine, it is possible that the rotor casts an intermittent shadow onto an object. In case of positive result, a first light intensity is determined as the highest value of light intensity measured by the first light sensor during a predetermined period of time, and a second light intensity is determined as a light intensity measured by the second light sensor during a predetermined period of time. Then, if the difference between the first light intensity and the second light intensity is higher than a predetermined threshold, interruption of the operation of the wind turbine may be ordered.

Depending on the position of the shadow flicker control system, a temporary shadow cast by e.g. a rotor blade may cause the measurement of direct light by the first light sensor to be unreliable. By taking the highest value measured by the first light sensor during a predetermined period of time (e.g. a few seconds), the measurement of direct light may be more reliable. Then, if the difference between the light intensities measured by the first and second sensors is higher than a threshold, and this measurement is not incidental (due to e.g. a few rays of sun shining through the clouds), an interrupt signal may be generated. An interrupt signal should however only be generated during those times of the day (and year) when a shadow could be cast on a shadow-sensitive object.

In some implementations, the information concerning whether on a specific date and at a specific time a shadow may be cast onto an object may e.g. be stored in a (remote) database or look-up table. Alternatively, such information may be calculated in real-time.

Further, to exclude an incidental sun ray shutting down operation of the wind turbine, the signal for interrupting the operation of the wind turbine may preferably be generated only after the threshold has been surpassed for an established minimum period of time, or only if the threshold is surpassed a predetermined number of times within a period of time.

In some embodiments, the predetermined threshold (for difference in the direct and indirect light intensities) may be selected from a plurality of thresholds based upon the time of the day. When a more precise control is needed for specific locations, a control may be implemented that takes into account a different threshold for e.g. sunset and sunrise on the one hand, and the rest of the day on the other hand. Alternatively, different thresholds may be provided depending on the date of the year (to take seasonal influences into account) and/or the geographical latitude of the wind turbine in question.

In a further aspect, a wind turbine control system is provided that is adapted to receive values of light intensities measured by the first and second light sensor of a shadow-control system substantially as hereinbefore described and further adapted to carry out a method as substantially hereinbefore described.

In yet another aspect, a wind turbine comprising such a wind turbine control system and such a shadow flicker control system is provided.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 illustrates the problem of shadow flicker caused by shadows of rotor blades of a wind turbine rotor;
Figures 2a - 2d are various views of an embodiment of the shadow flicker measurement system;
Figure 3 illustrates a method of operating a wind turbine according to an embodiment of the invention.

### DETAILED DESCRIPTION OF EMBODIMENTS

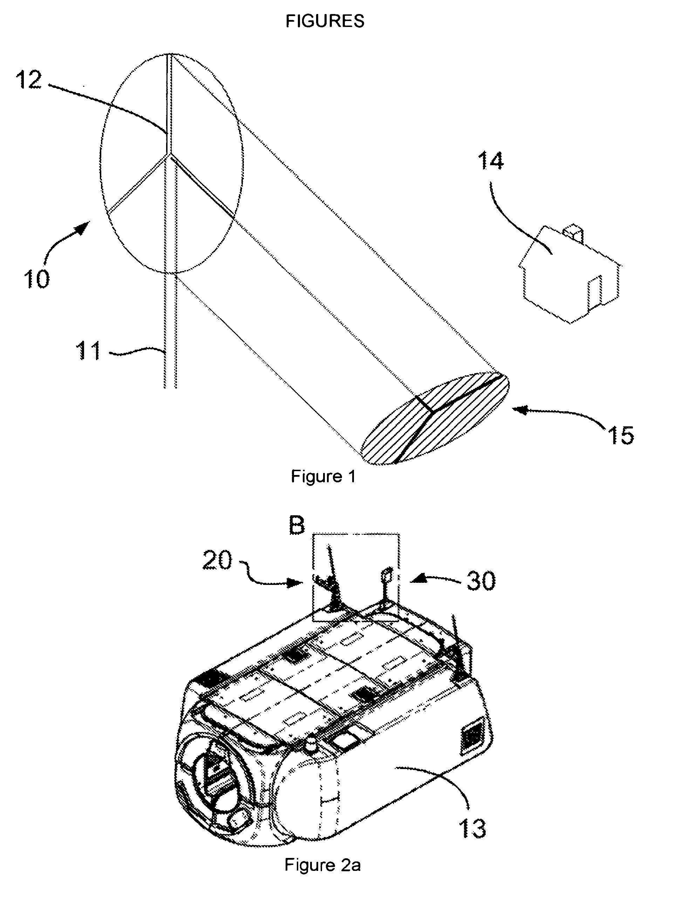

Figure 1 illustrates the phenomenon of shadow flicker that may be caused by rotor blades of wind turbines. In this case, a wind turbine 10 is shown that comprises a tower 11 and a rotor with three blades 12. If the sun light is bright enough, a clear shadow 15 of the rotor will be formed on the ground in the relative vicinity of the wind turbine.

Throughout the day and throughout the year, the area of the shadow and position of the shadow will vary. For example, at sunrise, when the sun's elevation angle is small, long shadows are cast in a westward direction. However, at sunset, long shadows may be cast in a substantially eastwards direction. In the middle of the day, shorter shadows will occur and their direction will change continuously throughout the day. As such, an area in which shadows may occur throughout the day can be determined for any wind turbine, taking into account the geographic location of the turbine, the rotor size and the date of the year.

If an object, such as e.g. a house 14, is placed within such an area surrounding the wind turbine, the shadow cast by the rotor may at instances fall upon the house. In operation, the rotor blades may thus cast intermittent shadows on the house. These intermittent shadows are generally regarded as a nuisance for the residents in the area. It has even been claimed that they may cause health problems.

Figures 2a - 2d illustrates various views of a first embodiment of a shadow flicker control system. Figure 2a illustrates how the shadow flicker control system may be mounted on top of a nacelle 13, generally at the rear of the nacelle. An advantage of mounting the system on the nacelle is that access to it (and maintenance) may be facilitated. The particular position of the system shown is merely an example. The system may be positioned in other areas of the nacelle roof without significantly affecting its operation. It is however preferable that it is not positioned too close to the hub. Further illustrated in figure 2a are two lightning arresters 20.

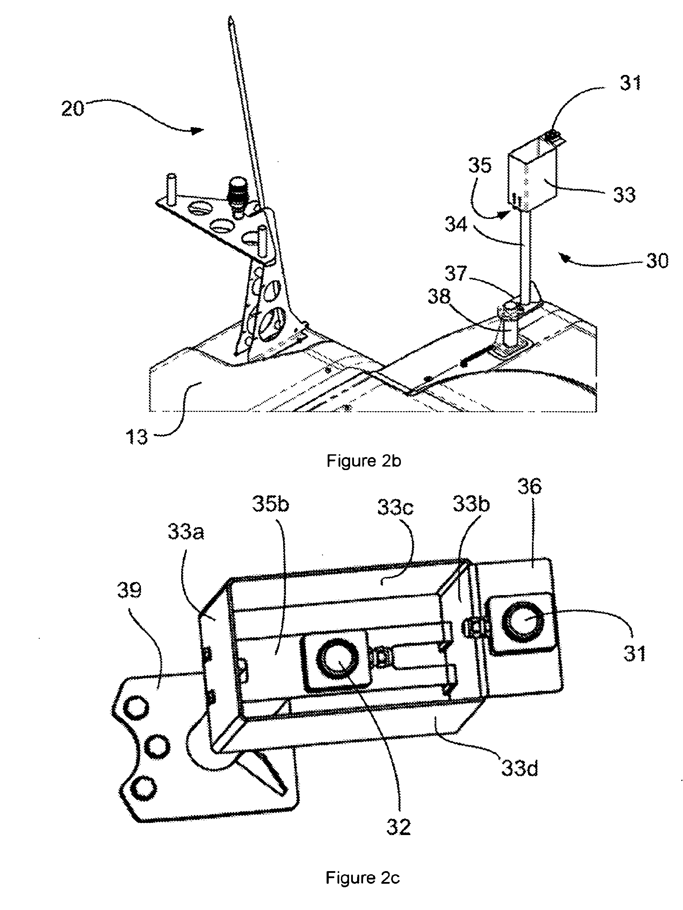

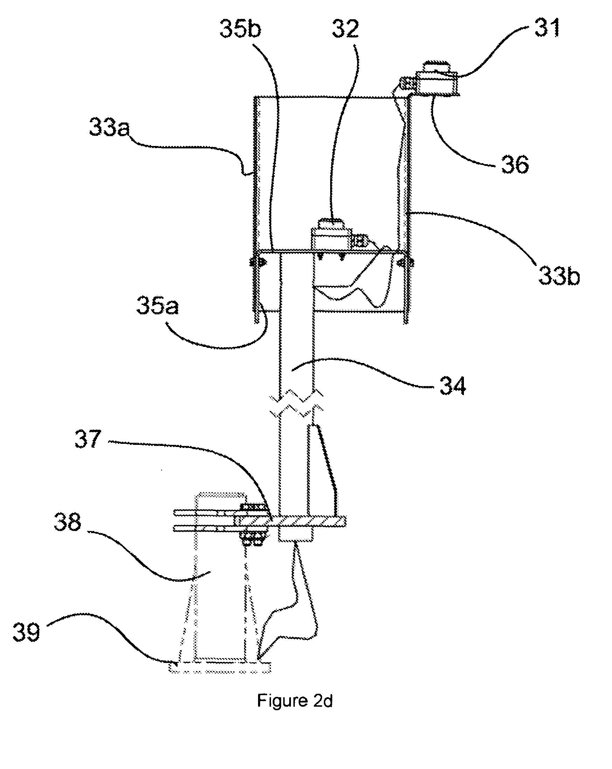

Figure 2b shows a better view of detail B indicated in figure 2a. Figure 2c shows a perspective top view and figure 2d shows a cross-sectional view of the same system. A first light sensor 31 is provided which may be positioned such that it substantially always can be directly irradiated by the sun. Since the system is mounted on the nacelle of the wind turbine, it is unlikely that neighbouring buildings, hills, or trees or similar can cast a shadow on the first light sensor.

A second light sensor may be provided in a casing 33. The side-walls 33a-33d of casing 33 serve as sun blocking elements, making direct irradiation by the sun of the second light sensor 32 substantially impossible, regardless of the momentary relative position of the sun. It will be clear that the same effect may be obtained if the casing were of any different cross-section. Depending on the geographical location of the wind turbine, the height of the casing relative to the sensor may need to be changed (or the position of the light sensor within the casing may need to be changed) to ensure that throughout the day, the second light sensor is in the shadow of the sun blocking element(s).

The second light sensor 32 may be mounted on a bracket 35. The bracket 35 may comprise a platform 35b and two mounting legs 35a at either end of the platform, extending perpendicular to the platform. The mounting legs 35a may be connected to two side-walls 33a and 33b of the casing 33. Each of the legs may comprise a plurality of mounting holes, such that the position of the platform 35b, within the casing 33 may be changed. The shadow flicker control system may thus be adaptable to different geographical locations in which it may be used. In an alternative embodiment, the casing may have e.g. telescopic walls to provide the same effect of adaptability.

It may be seen in figure 2 (particularly figure 2d), that the light sensors 31 and 32 are positioned in a plane and aimed "upwards". Since both light sensors 31 and 32 are thus oriented in such a way as to receive light from a hemisphere above respective planes, the values of light intensities measured throughout the whole day will be generally reliable. The measurement of light intensity will not be influenced by the relative position of the sun or e.g. the orientation of the nacelle.

As may be seen in figure 2c, with this particular configuration, no bottom is provided in casing 33. It may thus be avoided that snow (and also dirt or dust) is collected in casing 33, blocking the second light sensor and making any reading of this sensor unreliable. Additionally, or alternatively, a heating system may be integrated in the casing or in the sensors to melt any snow.

First light sensor 31 may be mounted on an extension 36 of side-wall 33b. The extension may be folded such as to form a substantially horizontal base. In principle, the first light sensor may be positioned in any different position, as long as, throughout the day it can be directly irradiated by the sun. Measurements made by the light sensors may be transmitted through suitable cables to a wind turbine control system. It will be clear that any kind of suitable light sensor may be used, such as e.g. pyronameters. The operation of the light sensor that is employed may be based e.g. on any of photodiodes, thermopiles, phototubes, photoresistors, photomultiplier tubes.

The casing 33 with bracket 35 may be mounted on a pole 34 which may house electrical and/or data cables. An attachment comprising a flat base 39 carrying a rod 38 may be used for mounting to the (frame of) the nacelle roof structure. The pole 34 may be connected to the rod through lug 37 clamped at an end of rod 38.

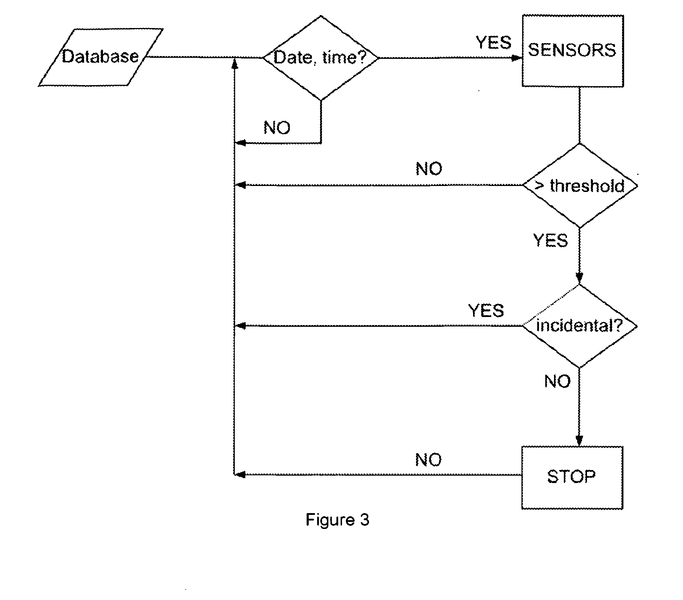

It will be clear that many variations of mounting the sensors and casing with respect to the nacelle are possible without affecting the operation of the system. The same system or a similar system could also be mounted on a pole in the relative vicinity of the wind turbine, as long as measurements on the pole can be regarded as representative for measurements on the turbine. Figure 3 illustrates a method of operating a wind turbine according to an embodiment of the invention. According to this embodiment, a database comprising relevant data for a wind turbine concerning for each day of the year, at which time of the day, an intermittent shadow may be cast on e.g. a house.

The current date and time may be compared with the registered dates and times in the database. If at a particular moment, it is possible that shadows may be cast on an object, a comparison may be made between the light intensities measured by the two light sensors. If the difference in light intensities is higher than a predetermined threshold, a signal could be generated for interrupting the operation of the wind turbine. If the difference in light intensities is below a threshold value, operation of the wind turbine does not need to be interrupted, since shadows are not present. It has been found that the difference in intensities between complete radiation (both direct sun light and diffuse light) and only diffuse light is indicative of the presence of shadows. The threshold used in this comparison may be an absolute value of illuminance (in luxes, or lumens) or irradiance (W/m²), or may be a percentage (a relative measurement).

In order to avoid that momentary passing of a wind turbine blade has an influence on the measured light intensity of the first light sensor, the highest value measured during a predetermined period of time, e.g. a few seconds, may be used. The rotation of the blades should however have no influence on the measurements of the second light sensor. For the second light sensor, a mean value, a maximum or minimum or other may be used.

Instead of looking up relevant data about shadows potentially being cast on an object, these data may also be calculated in real-time. These calculations may be calculated either at a wind turbine level, or remotely, at a central control level.

In this method, the signal for interrupting the operation of the wind turbine may be generated particularly if this situation is not incidental. For example, the wind turbine operation is only interrupted after the threshold has been surpassed for an established minimum period of time (for example 1 minute, or a few minutes), or is only interrupted if the threshold is surpassed a predetermined number of times within a period of time. This could be the case on a day wherein cloudy and sunny moments alternate.

Upon installation of a wind turbine, the system may be calibrated by adapting particularly the value of the threshold, and optionally e.g. the height of the sun blocking element(s) or position of the second light sensor with respect to the sun blocking element(s). In some implementations, it may be desirable to make the system more sensitive during e.g. sunset and sunrise than during the rest of the day. In these implementations, a plurality of thresholds may be predefined, and in accordance with the time of day, the suitable threshold may be selected. Alternatively, different thresholds may be provided depending on the date of the year (to take seasonal influences into account) and/or the geographical latitude of the wind turbine in question.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. A shadow flicker measurement system (30) comprising a sun blocking element (33) and a first (31) and a second (32) light sensor, wherein
each of said first and second light sensor (31, 32) is oriented such as to receive light from a hemisphere above a substantially horizontal plane, and wherein
the sun blocking element (30) and light sensors (31, 32) are arranged such that the first light sensor (31) can substantially always be directly irradiated by the sun and the second light sensor (32) can receive diffuse light and can substantially never be directly irradiated by the sun due to the presence of the sun blocking element (33), **characterised in that**
said first sensor (31) is arranged substantially on top of the sun blocking element (33).

2. A system according to claim 1, wherein said sun blocking element (33) is a casing comprising one or more side-walls (33a, 33b, 33c, 33d) and an open top, said second light sensor (32) being arranged inside said casing (33).

3. A system according to claim 2, wherein said casing (33) has a substantially open bottom, the second light sensor (32) being arranged on a platform (35b) extending between two sides of the casing.

4. A system according to claim 2 or 3, wherein the height of the side-walls (33a, 33b, 33c, 33d) with respect to the second light sensor (32) can be varied.

5. A system according to any of claims 2 - 4, wherein said first sensor is mounted on an extension (36) of one of the side-walls (33b).

6. A system according to any of claims 1 - 5, adapted to generate a signal indicating the presence of shadows when the difference in light intensity measured by the first light sensor and the light intensity measured by the second light sensor is above a predetermined threshold.

7. A system according to claim 6, wherein the predetermined threshold is selected from a plurality of thresholds.

8. A wind turbine comprising a nacelle and a shadow flicker measurement system according to any of claims 1 - 7 mounted on said nacelle.

9. A pole in the vicinity of at least one wind turbine comprising a shadow flicker measurement system according to any of claims 1 - 7.

10. Method for operating a wind turbine comprising a shadow flicker measurement system according to any of claims 1 - 7 and comprising a rotor that, when rotating, may cast an intermittent shadow onto an object depending on the relative position of the sun, the method comprising
determining whether it is possible, that due to the instantaneous position of the sun relative to the wind turbine, the rotor casts an intermittent shadow onto an object,
in case of positive result,
determining a first light intensity as the highest value of light intensity measured by the first light sensor during a predetermined period of time,
determining a second light intensity as a light intensity measured by the second light sensor during a predetermined period of time,
determining whether the difference between the first light intensity and the second light intensity is higher than a predetermined threshold,
in case of positive result,
determining whether this situation is incidental, and
in case of negative result,
interrupting operation of the wind turbine.

11. Method according to claim 10, wherein determining whether it is possible that due to the instantaneous position of the sun relative to the wind turbine, the rotor casts an intermittent shadow onto an object, comprises obtaining said information from a remote database.

12. Method according to claim 10 or 11, wherein the predetermined threshold is selected from a plurality of thresholds based upon the time of the day and/or the date and/or the geographical latitude.

13. Method according to any of claims 10 - 12, wherein operation of the wind turbine is restarted when the difference between the first light intensity and the second light intensity is lower than a predetermined threshold and/or when due to the instantaneous position of the sun relative to the wind turbine, it is not possible that the rotor casts an intermittent shadow onto an object.

14. A wind turbine control system adapted to receive values of light intensities measured by the first and second light sensor of a shadow flicker measurement system according to any of claims 1 - 7, and adapted to carry out a method according to any of claims 10 - 13.

15. A wind turbine comprising a wind turbine control system according to claim 14 and a shadow flicker measurement system according to any of claims 1-7.

## Patentansprüche

1. Schattenschlagmesssystem (30) umfassend ein Sonnenschutzelement (33) und einen ersten (31) und einen zweiten (32) Lichtsensor, wobei jeder der ersten und zweiten Lichtsensoren (31, 32) so ausgerichtet ist, um Licht aus einer Hemisphäre oberhalb einer im Wesentlichen horizontaler Ebene zu empfangen, und wobei das Sonnenschutzelement (30) und die Lichtsensoren (31, 32) so angeordnet sind, dass der erste Lichtsensor (31) im Wesentlichen immer direkt von der Sonne ausgestrahlt werden kann und der zweite Lichtsensor (32) diffuse Licht empfangen kann und er, aufgrund der Anwesenheit des Sonnenschutzelementes (33), im Wesentlichen nie direkt von der Sonne ausgestrahlt werden kann, **dadurch gekennzeichnet, dass** der erste Sensor (31) im Wesentlichen auf dem Sonnenschutzelement (33) angeordnet ist.

2. System nach Anspruch 1, wobei der Sonnenschutzelement (33) ein Gehäuse ist, das eine oder mehrere Seitenwandungen (331, 33b, 33c, 33d) und einen offenen Deckel umfasst, wobei der zweite Lichtsensor (32) in dem Gehäuse (33) angeordnet ist.

3. System nach Anspruch 2, wobei das Gehäuse (33) einen im Wesentlichen offenen Boden hat, wobei der zweite Lichtsensor (32) auf einer Plattform (35b) angeordnet ist, die sich zwischen zwei Seiten des Gehäuses erstreckt.

4. System nach Anspruch 2 oder 3, wobei die Höhe der Seitenwandungen (33a, 33b, 33c, 33d) bezüglich des zweiten Lichtsensors (32) variiert werden kann.

5. System nach einem der Ansprüche 2 - 4, wobei der erste Sensor auf einer Verlängerung (36) von einer der Seitenwandungen (33b) angeordnet ist.

6. System nach einem der Ansprüche 1 - 5, das so angepasst ist, um ein Signal zu erzeugen, das die Anwesenheit von Schatten zeigt, wenn die Abweichung zwischen der vom ersten Lichtsensor gemessenen Lichtintensität und der vom zweiten Lichtsensor gemessenen Lichtintensität oberhalb eines vorbestimmten Schwellwertes liegt.

7. System nach Anspruch 6, wobei der vorbestimmte Schwellwert ausgewählt aus einer Vielzahl von Schwellwerten ist.

8. Windturbine umfassend eine Gondel und ein Schattenschlagmesssystem nach einem der Ansprüche 1 - 7, das auf der Gondel angeordnet ist.

9. Mast in der Nähe von mindestens einer Windturbine umfassend ein Schattenschlagmesssystem nach einem der Ansprüche 1 - 7.

10. Verfahren zum Betrieb einer Windturbine umfassend ein Schattenschlagmesssystem nach einem der Ansprüche 1 - 7 und umfassend einen Rotor der, wenn er dreht, in Abhängigkeit von der relativen Position der Sonne einen aussetzenden Schatten auf einen Gegenstand werfen kann, wobei das Verfahren das Ermitteln umfasst, ob es möglich ist, dass der Rotor aufgrund der momentanen Position der Sonne bezüglich der Windturbine einen aussetzenden Schatten auf einen Gegenstand wirft, wobei, wenn dies möglich ist, eine erste Lichtintensität als der Höchstwert der in einem vorbestimmten Zeitraum vom ersten Lichtsensor gemessenen Lichtintensität bestimmt wird, eine zweite Lichtintensität als eine in einem vorbestimmten Zeitraum vom zweiten Lichtsensor gemessene Lichtintensität bestimmt wird, wobei es ermittelt wird, ob die Abweichung zwischen der ersten Lichtintensität und der zweiten Lichtintensität höher als ein vorbestimmter Schwellwert ist, wobei, wenn dies so ist, es ermittelt wird, ob dies zufällig so ist und, wenn dies nicht zufällig so ist, der Betrieb der Windturbine unterbrochen wird.

11. Verfahren nach Anspruch 10, wobei das Ermitteln, ob es möglich ist, dass der Rotor aufgrund der momentanen Position der Sonne bezüglich der Windturbine einen aussetzenden Schatten auf einen Gegenstand wirft, das Erhalten dieser Information aus einer entfernter Datenbank umfasst.

12. Verfahren nach Anspruch 10 oder 11, wobei der vorbestimmte Schwellwert ausgewählt aus einer Vielzahl von Schwellwerten in Abhängigkeit von der Tageszeit und/oder des Datums und/oder der geographischen Breite ist.

13. Verfahren nach einem der Ansprüche 10 - 12, wobei der Betrieb der Windturbine erneut gestartet wird, wenn die Abweichung zwischen der ersten Lichtintensität und der zweiten Lichtintensität unterhalb eines vorbestimmten Schwellwertes ist und/oder wenn es, aufgrund der momentanen Position der Sonne bezüglich der Windturbine, nicht möglich ist dass der Rotor einen aussentzenden Schatten auf ein Gegenstand wirft.

14. System zur Steuerung einer Windturbine, das so angepasst ist, um Werte von Lichtintensitäten zu empfangen, die von einem ersten und einem zweiten Lichtsensor eines Schattenschlagmessssystems nach einem der Ansprüche 1 - 7 gemessen werden und das angepasst ist, um ein Verfahren nach einem der Ansprüche 10 - 13 durchzuführen.

15. Windturbine umfassend ein System zur Steuerung der Windturbine nach Anspruch 14 und ein Schattenschlagmesssystem nach einem der Ansprüche 1 - 7.

## Revendications

1. Système (30) de mesure de scintillement d'ombre comprenant un élément pare-soleil (33) et un premier (31) et un deuxième (32) capteur de lumière, dans lequel chacun desdits premier et deuxième capteurs (31, 32) de lumière est orienté de façon à recevoir de la lumière provenant d'une hémisphère située au-dessus d'un plan essentiellement horizontal, et dans lequel l'élément pare-soleil (30) et les capteurs (31, 32) de lumière sont disposés de façon que le premier capteur (31) de lumière peut essentiellement toujours être irradié directement par le soleil et que le deuxième capteur (32) de lumière peut recevoir de la lumière diffuse et ne peut essentiellement jamais être directement irradié par le soleil en raison de la présence de l'élément pare-soleil (33), **caractérisé en ce que** ledit premier capteur (31) est disposé essentiellement sur l'élément pare-soleil (33).

2. Système selon la revendication 1, dans lequel ledit élément pare-soleil (33) est un boîte comprenant une ou plusieurs parois latérales (33a, 33b, 33c, 33d) et un couvercle ouvert, étant ledit deuxième capteur (32) de lumière disposé à l'intérieur dudit boîte (33).

3. Système selon la revendication 2, dans lequel ledit boîte (33) a un fond essentiellement ouvert, étant le deuxième capteur (32) de lumière disposé sur une plate-forme (35b) qui s'étend entre deux côtés du boîte.

4. Système selon la revendication 2 ou 3, dans lequel la hauteur des parois latérales (33a, 33b, 33c, 33d) par rapport au deuxième capteur (32) de lumière peut être variée.

5. Système selon l'une quelconque des revendications 2 - 4, dans lequel ledit première capteur est monté sur une extension (36) d'une des parois latérales (33b).

6. Système selon l'une quelconque des revendications 1 - 5, adapté pour générer un signal indiquant la présence d'ombres lorsque le différence entre l'intensité de lumière mesurée par le première capteur de lumière et l'intensité de lumière mesurée par le deuxième capteur de lumière est supérieure à un seuil prédéterminé.

7. Système selon la revendications 6, dans lequel le seuil prédéterminé est choisi parmi une pluralité de seuils.

8. Éolienne comprenant une nacelle et un système de mesure de scintellement d'ombre selon l'une quelconque des revendications 1 - 7 monté sur ladite nacelle.

9. Mât dans la proximité d'au moins une éolienne comprenant un système de mesure de scintillement d'ombre selon l'une quelconque des revendications 1 - 7.

10. Méthode pour commander une éolienne comprenant un système de mesure de scintellement d'ombre selon l'une quelconque des revendications 1 - 7 et comprenant un rotor qui, lorsqu'il pivote, peut jeter une ombre intermittente sur un objet dépendant de la position relative du soleil, comprenant la méthode déterminer s'il est possible, en raison de la position instantanée du soleil par rapport à l'éolienne, que le rotor jette une ombre intermittente sur un objet, en cas de résultat positif, établir une première intensité de lumière comme la valeur la plus élevée de l'intensité de lumière mesurée par le première capteur de lumière pendant une période de temps prédéterminée, établir une deuxième intensité de lumière comme une intensité de lumière mesurée par le deuxième capteur de lumière pendant une période de temps prédéterminée, déterminer si la différence entre la première intensité de lumière et la deuxième intensité de lumière est supérieure à un seuil prédéterminé, en cas de résultat positif, déterminer si cette situation est fortuite et, en cas de résultat négatif, interrompre l'opération de l'éolienne.

11. Méthode selon la revendication 10, dans laquelle déterminer s'il est possible que, en raison de la position instantanée du soleil par rapport à l'éolienne, le rotor jette une ombre intermittente sur un objet comprend obtenir ladite information à partir d'une base de données distante.

12. Méthode selon la revendication 10 ou 11, dans laquelle le seuil prédéterminé est choisi parmi une pluralité de seuils basés sur le moment de la journée et/ou la date et/ou la latitude géographique.

13. Méthode selon l'une quelconque des revendications 10 - 12, dans laquelle l'opération de l'éolienne est reprise lorsque la différence entre la première intensité de lumière et la deuxième intensité de lumière est inférieure à un seuil prédéterminé et/ou lorsque, en raison de la position instantanée du soleil par rapport à l'éolienne, il n'est pas possible que le rotor jette une ombre intermittente sur un objet.

14. Système de commande d'éolienne adapté à recevoir des valeurs d'intensité de lumière mesurées par le première et par le deuxième capteur de lumière d'un système de mesure de scintillement d'ombre selon l'une quelconque des revendications 1 - 7, et adapté à mettre à exécution une méthode selon l'une quelconque des revendications 10 - 13.

15. Éolienne comprenant un système de commande d'éolienne selon la revendication 14 et un système de mesure de scintillement d'ombre selon l'une quelconque des revendications 1 - 7.
